# EUROPEAN PATENT APPLICATION

(11) **EP 4 307 265 A2**
(43) Date of publication of application: **17.01.2024**
(21) Application number: 23176830.0
(22) Date of filing: 01.06.2023
(51) Int. Cl.: G08B 25/00

(54) **SYSTEMS AND METHODS FOR MAKING CHANGES TO SECURITY SYSTEM SETTINGS BASED ON IDENTIFIED CHANGES IN OCCUPANT BEHAVIOR**

(30) Priority: 20.06.2022 US 202217844520
(71) Applicant: Honeywell International Inc., Charlotte, NC 28202 (US)
(72) Inventor: JAIN, Abhisekh, Charlotte, 28202 (US); DIVAKARA, Manjunatha Tumkur, Charlotte, 28202 (US)
(74) Representative: Haseltine Lake Kempner LLP

(57) **Abstract**

A method includes collecting over time security data from each of at least some of a plurality of security system components. A pattern is identified based at least in part on the collected security data, the pattern identifying an expected behavior of one or more occupants of the facility. Live security data is received from at least some of the plurality of security system components, and is compared with the identified pattern to identify when the current behavior of one or more occupants of the facility deviates from the expected behavior by more than a threshold. When the current behavior of one or more occupants of the facility deviates from the expected behavior by more than the threshold, one or more security system settings of the security system are changed and the security system is operated using the one or more changed security system settings.

## Description

### Technical Field

The present disclosure relates generally to security systems, and more particularly, to methods and systems for improving the operation of security systems.

### Background

Security systems often employ a number of different security system components that monitor occupant activity and/or control access to a secured area. Security system components can include, for example, door locks, card readers, motion sensors, video cameras and the like. In many cases, security system settings are initially configured during installation, and remain unchanged during subsequent operation. What would be desirable are systems and methods for making changes to security system settings based on identified changes in occupant behavior of a secure facility.

### Summary

This disclosure relates to relates to security systems, and more particularly, to methods and systems for improving the operation of security systems. An example may be found in a method of improving operation of a security system for a facility, wherein the security system includes a plurality of security system components, where at least some of the plurality of security system components provide security data pertaining to the particular security system component. The illustrative method includes collecting over time the security data from each of the at least some of the plurality of security system components. A pattern is identified based at least in part on the collected security data, where the pattern identifies an expected behavior of one or more occupants of the facility. Live security data is received from at least some of the plurality of security system components, where the live security data represents a current behavior of one or more occupants of the facility. At least some of the live security data is compared with the identified pattern to identify when the current behavior of one or more occupants of the facility deviates from the expected behavior by more than a threshold. When the current behavior of one or more occupants of the facility deviates from the expected behavior by more than the threshold, one or more security system settings of the security system are changed. The security system is then operated, at least temporarily, using the one or more changed security system settings.

Another example is found in a method of changing a security level of a security system. The security system includes a plurality of security system components, where at least some of the plurality of security system components provide security data pertaining to the particular security system component. The illustrative method includes collecting over time historical security data from each of the at least some of the plurality of security system components. Artificial intelligence is used to learn historical patterns within the historical security data, where the historical patterns defining expected values for the security data. Live security data is received from at least some of the plurality of security system components and is compared with the learned historical patterns to detect situations in which the live security data differ from the expected values learned from the historical security data by more than a threshold. When the live security data differ from the expected values learned from the historical security data by more than a threshold, the security level of the security system is changed and the security system is operated at the changed security level.

Another example is found in a security system. The illustrative security system includes a plurality of security system components, where at least some of the plurality of security system components provide security data pertaining to the particular security system component. A controller is operatively coupled to the plurality of security system components. The controller is configured to receive at least some of the security data. One or more violations of one or more security requirements are identified based at least in part on the received security data, wherein each of the one or more security requirements is defined at least part by one or more static configuration settings of the security system. A change to one or more of the static configuration settings of the security system is determined based at least in part on the identified one or more violations. The determined change is made to one or more of the static configuration settings, and the security system is operated using the changed one or more of the static configuration settings.

The preceding summary is provided to facilitate an understanding of some of the features of the present disclosure and is not intended to be a full description. A full appreciation of the disclosure can be gained by taking the entire specification, claims, drawings, and abstract as a whole.

### Brief Description of the Drawings

The disclosure may be more completely understood in consideration of the following description of various illustrative embodiments of the disclosure in connection with the accompanying drawings, in which:
Figure 1 is a schematic block diagram of an illustrative security system;
Figure 2 is a flow diagram showing an illustrative method of improving operation of a security system such as the security system of Figure 1;
Figure 3 is a flow diagram showing an illustrative method of changing a security level of a security system such as the security system of Figure 1;
Figure 4 is a flow diagram showing an illustrative method;
Figure 5 is a flow diagram showing an illustrative method;
Figure 6 is a flow diagram showing an illustrative method;
Figure 7 is a flow diagram showing an illustrative method;
Figure 8 is a flow diagram showing an illustrative method;
Figure 9 is a flow diagram showing an illustrative method;
Figure 10 is a flow diagram showing an illustrative method; and
Figure 11 is a screen shot providing an example of soliciting user approval for a recommended change to a security system setting.

While the disclosure is amenable to various modifications and alternative forms, specifics thereof have been shown by way of example in the drawings and will be described in detail. It should be understood, however, that the intention is not to limit aspects of the disclosure to the particular illustrative embodiments described. On the contrary, the intention is to cover all modifications, equivalents, and alternatives falling within the spirit and scope of the disclosure.

### Description

The following description should be read with reference to the drawings wherein like reference numerals indicate like elements. The drawings, which are not necessarily to scale, are not intended to limit the scope of the disclosure. In some of the figures, elements not believed necessary to an understanding of relationships among illustrated components may have been omitted for clarity.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

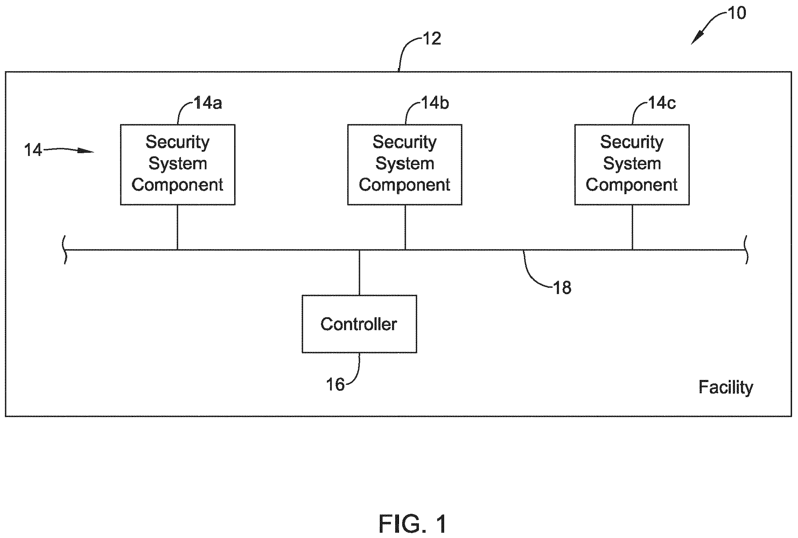

Figure 1 is a schematic block diagram of an illustrative security system 10 within a facility 12. The illustrative security system 10 may include a plurality of security system components 14, individually labeled as 14a, 14b and 14c. While a total of three security system components 14 are shown, this is merely illustrative, as the security system 10 may include any number of security system components 14, and in some instances may include substantially more than three security system components 14. In some cases, the security system components 14 may include, for example, door locks, card readers, motion sensors, video cameras and/or any other suitable security system component. At least some of the plurality of security system components 14 are configured to provide security data pertaining to the particular security system component 14.

A controller 16 is operably coupled to the plurality of security system components 14 via a network 18. The network 18 may be a wired network or a wireless network, for example. In some cases, the network 18 may be part of a building management system (BMS) network. In some cases, the network 18 may be a standalone network dedicated to the security system 10, while in other cases, the network 18 may be an IT network or a combination IT network and BMS network. In the example shown, the controller 16 is configured to receive at least some of the security data that is provided by at least some of the security system components 14.

In some cases, the controller 16 is configured to identify one or more violations of one or more security requirements based at least in part on the received security data, wherein each of the one or more security requirements is defined at least part by one or more static configuration settings of the security system 10, and to determine a change to one or more of the static configuration settings of the security system 10 based at least in part on the identified one or more violations. Static configuration settings include settings that remain static during normal operation of the security system, such as a door close time, a door unlock duration, a card swipe delay between card swipes, an exit delay time after arming, an enter delay time before disarming, etc. The controller 16 is configured to make the determined change to one or more of the static configuration settings, and to operate the security system 10 using the changed one or more of the static configuration settings. In some cases, the determined change is automatically made, while in other cases a recommendation is presented to an operator of the security system to approve the change.

The changed one or more of the static configuration settings may include one or more of a transient duration for making a card reader swipe, a door lock duration, a door held open warning time, a door held open active time, a door open state time, and a door latch output delay, an exit delay time after arming, an enter delay time before disarming, and/or any other suitable static configuration setting. In some cases, the controller 16 may be configured to identify one or more events associated with one or more security requirements based at least in part on the received security data, and to determine a change to one or more of the static configuration settings of the security system based at least in part on the identified one or more events. For example, the controller 16 may identify a number of alarm events that result from a user not exiting the facility after arming the security system within an exit delay time after arming setting. The controller may determine to increase the exit delay time after arming settings. In some cases, the exit delay time after arming settings may be increased by an amount that will reduce the number of alarm events that result from a user not exiting the facility after arming the security system within an exit delay time after arming setting.

In another example, the controller 16 may identify a number of alarm events that result from users swiping their access card and then not getting through and closing a corresponding access door within a door open state time. The controller 16 may determine to increase the door open state time setting. In some cases, the door open state time setting may be increased by an amount that will reduce the number of alarm events that result from a user swiping their access card and not getting through and closing the corresponding access door within a door open state time. In some cases, the static configuration setting may be user specific. For example, the controller 16 may increase the door open state time setting for a particular user (e.g. user in a wheel chair), while not changing the door open state time setting for other users. These are just examples.

In some cases, the controller 16 can change one or more settings (static or dynamic) of the security system depending on identified changes in occupant behavior. For example, a particular user may typically enter a facility between 7:30AM and 8:30AM each weekday morning, as tracked by card swipes at the entrance to the facility. If the controller 16 detects the user is attempting to access the facility at 3:00AM on Sunday, the controller 16 may automatically require multi-factor authentication for that 3:00AM entry, which may require not only a card swipe but also entry of a PIN code. Also, recording of the video from security cameras at the entrance of the facility may be automatically started to record the entry. These are just some examples.

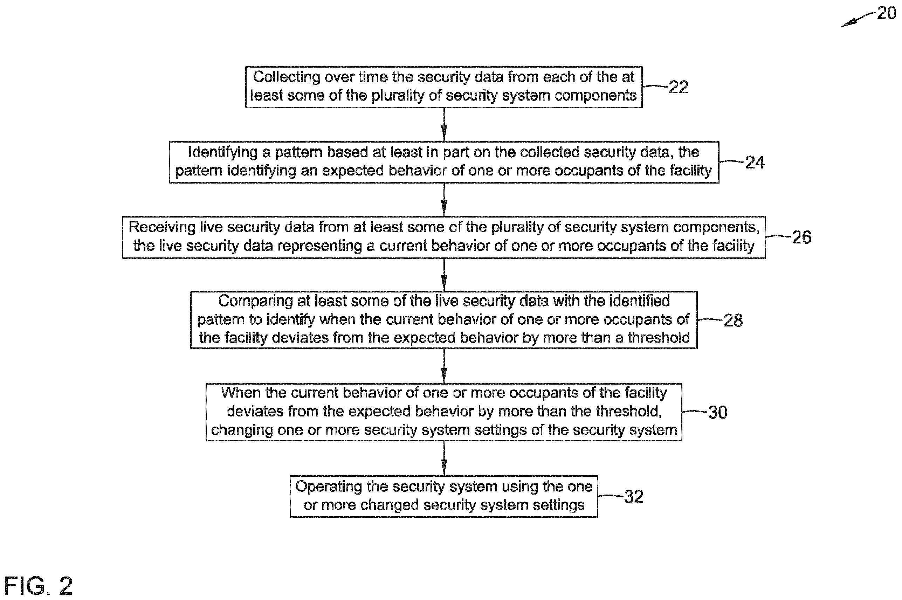

Figure 2 is a flow diagram showing an illustrative method 20 of improving operation of a security system (such as the security system 10) for a facility (such as the facility 12). In this example, the security system includes a plurality of security system components (such as the security system components 14), where at least some of the plurality of security system components provide security data pertaining to the particular security system component. The illustrative method 20 includes collecting over time the security data from each of at least some of the plurality of security system components, as indicated at block 22. A pattern is identified based at least in part on the collected security data. The pattern identifying an expected behavior of one or more occupants of the facility, as indicated at block 24.

Live security data is received from at least some of the plurality of security system components, where the live security data represents a current behavior of one or more occupants of the facility, as indicated at block 26. In some instances, the live security data represents a length of time that one or more occupants took to carry out a predefined security system-related task, and the identified pattern identifies an expected length of time to carry out the predefined security system-related task. The predefined security system-related task may include one or more of opening a door after unlocking the door, closing a door after entry, arming the security system, and disarming the security system. These are just example. In some cases, the live security data includes a time stamp for a detected event, and the pattern yields an expected time of day for the detected event. For example, the detected event may include accessing an area of the facility. At least some of the live security data is compared with the identified pattern to identify when the current behavior of one or more occupants of the facility deviates from the expected behavior by more than a threshold, as indicated at block 28.

When the current behavior of one or more occupants of the facility deviates from the expected behavior by more than the threshold, one or more security system settings of the security system are changed, as indicated at block 30. In some cases, changing one or more security system settings includes automatically changing the one or more changed security system settings. Changing one or more security system settings may include receiving operator input authorizing the change of the one or more changed security system settings in response to an automatically generated recommendation. Changing the one or more changed security system settings may include changing a static configuration setting of the security system, for example. Changing the one or more security system settings may include changing a security setting that increases a security level of at least part of the facility. Changing the one or more security system settings may include changing a first security setting that increases a security level of a first part of a facility and changing a second security setting that decreases a security level of a second part of the facility. The security system is then operated using the one or more changed security system settings, as indicated at block 32.

The security system 10 may monitor a variety of different parameter values. Examples include but are not limited to the time taken to close the door after entry (access), the time taken to arm/disarm the system (intrusion), the number of people detected (access and video based) and time of the day when action takes place (in access based solution on swipe in/out, in video system based on facial recognition).

The security system 10 may take a variety of different actions, with respect to security level. Examples include but are not limited to enabling multi-factor authentication for a user when the access code was wrongly entered twice, increasing the timeouts when the system arm/disarm becomes close to exit delay/entry delay, setting multi-factor authentication when the door lock engage back after unlock is more than usual, triggering video recording and video analytics when there are more than a usual number of people present, enabling multi-factor authentication and start video recording at all doors when there are multiple doors not shut after access, changing entire site behavior to increase security level when there are more than one door force opened status, changing access level or requiring multi-function authentication when people are accessing the site at unusual time, enabling multi-factor authentication when access data and video data show different occupancy, which can be a result of tailgating at access doors, raising security in restricted zones and reducing security in low security zones as a result of detecting more people than usual, and raising a critical/emergency alarm to a site administrator when there is an unusual number of alarms at a site.

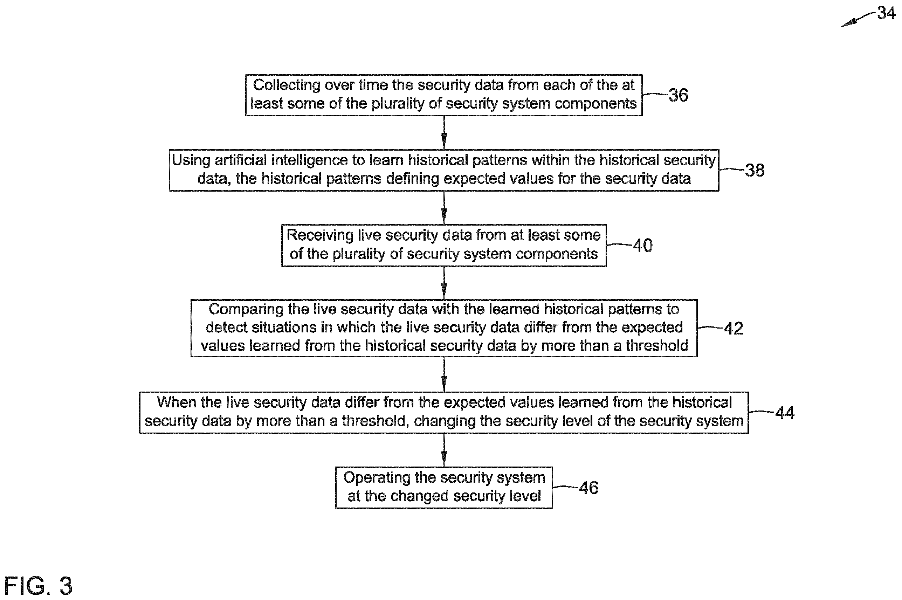

Figure 3 is a flow diagram showing an illustrative method 34 of changing a security level of a security system (such as the security system 10). In this example, the security system includes a plurality of security system components (such as the security system components 14), where at least some of the plurality of security system components provide security data pertaining to the particular security system component. The illustrative method 34 includes collecting over time the historical security data from each of at least some of the plurality of security system components, as indicated at block 36. Artificial intelligence is used to learn historical patterns within the historical security data. The historical patterns defining expected values for the security data, as indicated at block 38. Live security data is received from at least some of the plurality of security system components, as indicated at block 40. The live security data is compared with the learned historical patterns to detect situations in which the live security data differ from the expected values learned from the historical security data by more than a threshold, as indicated at block 42.

When the live security data differ from the expected values learned from the historical security data by more than a threshold, the security level of the security system is changed, as indicated at block 44. The security system is then operated at the changed security level, as indicated at block 46. In some cases, the security level of the security system may include two or more distinct security levels, and changing the security level of the security system may include moving between two of the distinct security levels.

In some cases, the security system may be configured to implement any of a plurality of security requirements, and each of the two or more distinct security levels implement a different combination of the plurality of security requirements. The plurality of security requirements may include one or more of presenting a security card for access, providing a pin number for access, and requiring multi factor authorization for access. Changing the security level of the security system may include one of decreasing the security level in order to process people through a secured zone of the facility faster, or increasing the security level in response to a perceived threat. These are just examples.

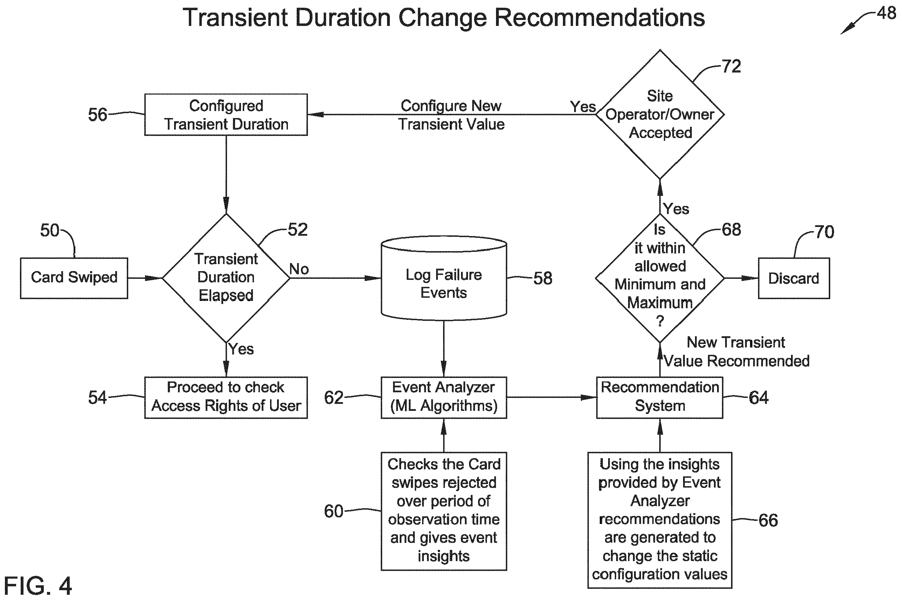

In some cases, one or more different methods or algorithms may be executed in order to determine when a change in security level is appropriate. In some cases, one or more different methods or algorithms may be downloaded and executed as appropriate. Figures 4 through 10 provide examples of method or algorithms that may be downloaded and executed, depending on what is currently happening. In some cases, these methods or algorithms may be stored on a cloud-based server, for example. A user may determine that a particular method or algorithm may be useful given current conditions, and may decide to download and execute that particular method or algorithm. In some cases, the security system 10 may do this automatically. In some cases, different predetermined packages of method or algorithms may be pre-stored in a library, and an operator may select one or more of the different predetermined packages for download and install. Each predetermined package may include a different combination of method or algorithms.

Figure 4 is a flow diagram showing an illustrative method of recommending a change to a transient duration. In this example, the transient duration represents a duration that must occur between successive card swipes. A card such as an identification card is swiped, as indicated at block 50. If the transient duration has elapsed, as indicated at decision block 52, control passes to block 54 where the user access rights of the user are checked. However, if the transient duration has not elapsed, control passes to block 58, where a failure is logged. If the user access rights are found to be valid, access is granted and logged. If the user access rights are not found to be valid, access is rejected and logged.

The rejected card swipes are checked, as indicated at block 60, and corresponding event insights are provided to an event analyzer, as indicated at block 62. The event analyzer 62 also has access to the logged failure events block 58. In this example, the event analyzer 62 uses the insights and/or the logged failure events to determine recommendations for making changes to security system settings, such as changes to the transient duration, as indicated at block 66. In some cases, the event analyzer 62 uses Machine Learning and/or Artificial Intelligence to determine recommendations for making changes to security system settings. Recommendations are provided to the recommendation system, as indicated at block 64, which in this example, provides a new recommended transient value. At decision block 68, a determination is made as to whether the newly recommended transient value is within an allowed range. If not, the newly recommended transient value is discarded, as indicated at block 70. If the newly recommended transient value is within the allowed range, control passes to block 72, where a site operator or owner is asked to accepts the newly recommended transient value. Once accepted, the newly recommended transient value becomes the configured transient duration, as indicated at block 56, which is passed for use by decision block 52.

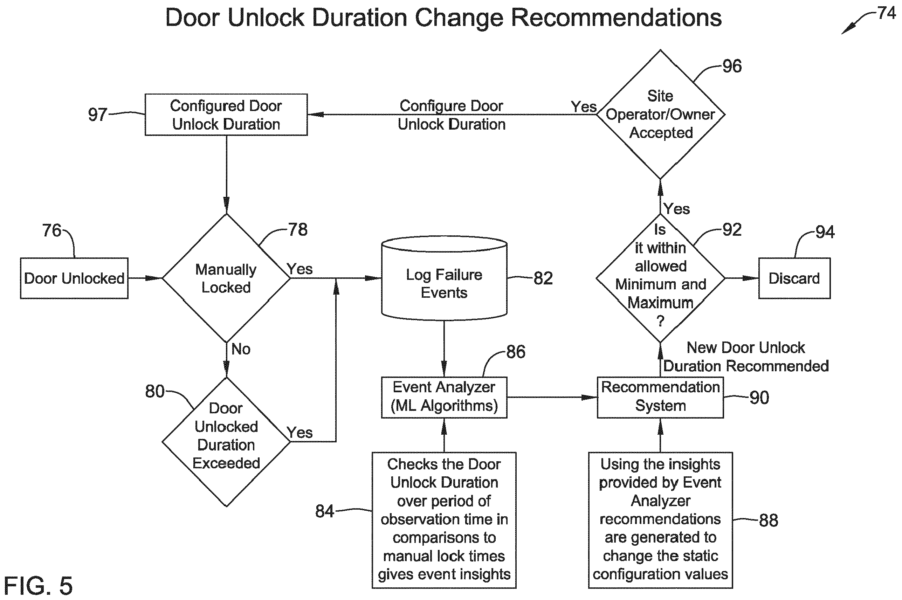

Figure 5 is a flow diagram showing an illustrative method 74 of recommending a change to a door unlock duration. In this example, the door unlock duration represents a duration that a door may remain unlocked during an access event. In Figure 5, a door is unlocked, as indicated at block 76, such as in response to a valid card swipe. If the door was manually locked, and thus could not be unlocked by the access card system, as indicated at decision block 78, control passes to block 82, where a failure is logged. If the door was not manually locked, control passes to decision block 80, where a determination is made as to whether the door remained in the unlocked state for longer than the door unlock duration. If the door was not re-locked before the door unlock duration expired, control passes to block 82, where the failure is logged.

The actual door unlock durations (i.e. actual times between unlock and re-lock events for the door) over time are checked, as indicated at block 84, and corresponding event insights are provided to an event analyzer, as indicated at block 86. The event analyzer 86 also has access to the logged failure events block 82. The event analyzer 86 uses the insights and/or the logged failure events to determine recommendations for making changes to static configuration settings, such as the door unlock duration, as indicated at block 88. In some cases, the event analyzer 86 uses Machine Learning and/or Artificial Intelligence to determine recommendations for making changes to security system settings. The recommendations are provided to the recommendation system, as indicated at block 90. A new door unlock duration is recommended. At decision block 92, a determination is made as to whether the newly recommended door unlock duration is within an allowed range. If not, the newly recommended door unlock duration is discarded, as indicated at block 94. If the newly recommended door unlock duration is within the allowed range, control passes to block 96, where the site operator or owner accepts is asked to accept the newly recommended door unlock duration. The newly recommended door unlock duration then becomes the configured door unlock duration, as indicated at block 97, which is passed for use by the decision block 78.

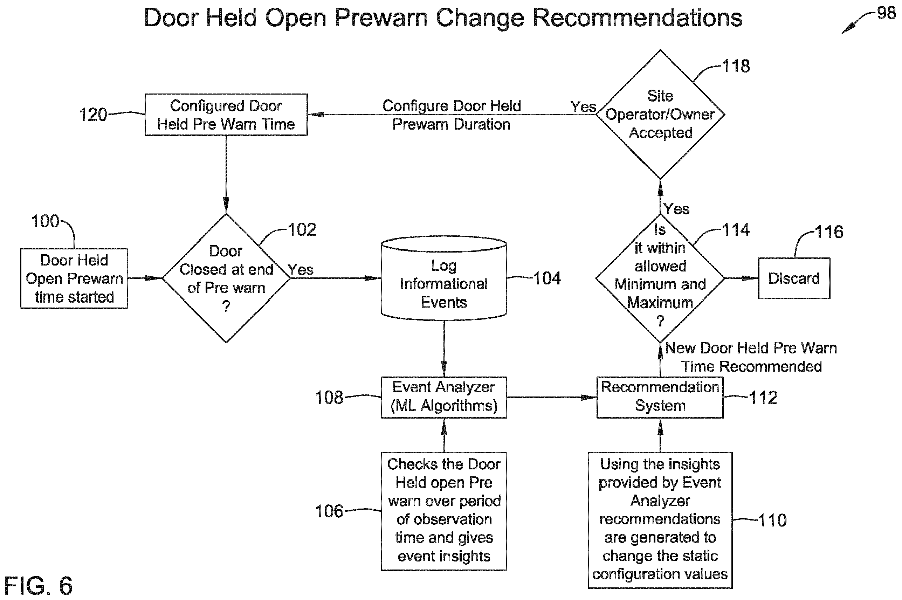

Figure 6 is a flow diagram showing an illustrative method 98 of recommending a change to a door held open prewarn duration. In this example, the door held open prewarn duration represents a maximum duration that a door may remain open before a pre-warning alert is issued. A door held open prewarn time is started when a door is initially opened, as indicated at block 100. A determination is made at decision block 102 as to whether the door was closed by the end of the door held open prewarn period. If so, an information event is logged, as indicated at block 104. If not, an information event is also logged, sometimes along with the actual time that the door was closed. The actual door held open times are checked, as indicated at block 106, and corresponding event insights are provided to an event analyzer, as indicated at block 108. The event analyzer also has access to the logged information events at block 104. In this example, the event analyzer 62 uses these insights and/or logged information events to determine recommendations for making changes to static configuration settings, such as changes to the door held open prewarn duration, as indicated at block 110. In some cases, the event analyzer 108 uses Machine Learning and/or Artificial Intelligence to determine recommendations for making changes to security system settings. The recommendations are provided to the recommendation system, as indicated at block 112. A new door held open prewarn duration is recommended. At decision block 114, a determination is made as to whether the newly recommended door held open prewarn is within an allowed range. If not, the newly recommended door held open prewarn duration is discarded, as indicated at block 116. If the newly recommended door held open prewarn duration is within the allowed range, control passes to block 118, where the site operator or owner is asked to accept the newly recommended door held open prewarn duration. The newly recommended door unlock duration then becomes the configured door held open prewarn duration, as indicated at block 120, which is passed for use by decision block 102.

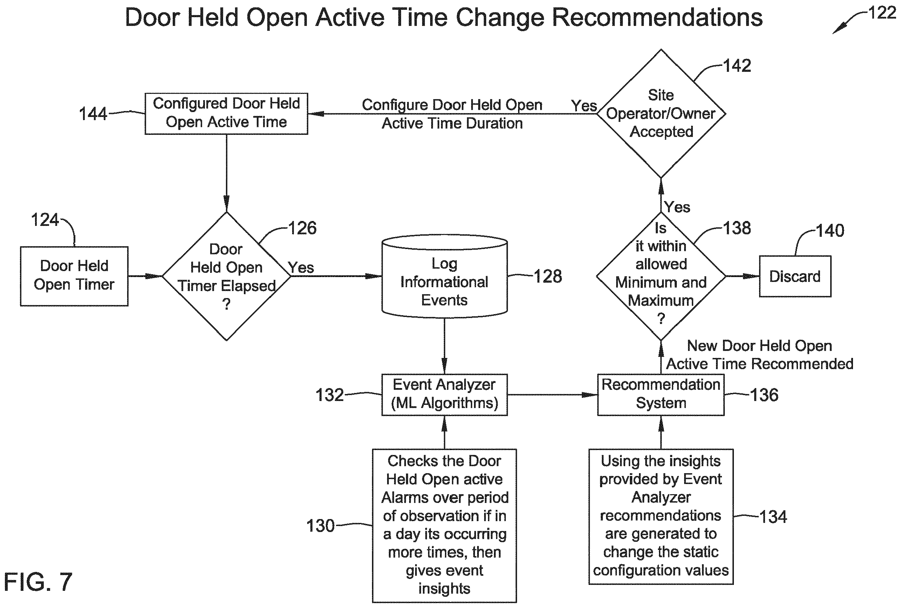

Figure 7 is a flow diagram showing an illustrative method 122 of recommending a change to the door held open active time. In this example, the door held open active time represents a maximum duration that a door may remain open before an alert is issued. A door held open timer is activated, as indicated at block 124. At decision block 126, a determination is made as to whether the door was closed by the end of the door held open active time. If so, an information event is logged, as indicated at block 128. If not, an information event is also logged, sometimes along with the actual time that the door was closed. The door held open active alarms over time are checked, as indicated at block 130, and corresponding event insights are provided to an event analyzer, as indicated at block 132. The event analyzer also has access to the logged informational events at block 128. The event analyzer uses the insights are/or the logged information events to determine recommendations for making changes to static configuration settings, such as the door help open active time, as indicated at block 134. The recommendations are provided to the recommendation system, as indicated at block 136. A new door held open active time duration is recommended. At decision block 138, a determination is made as to whether the newly recommended door held open active time is within an allowed range. If not, the newly recommended door held open active time duration is discarded, as indicated at block 140. If the newly recommended door held open active time duration is within the allowed range, control passes to block 142, where the site operator or owner is asked to accepts the newly recommended door held open prewarn time. The newly recommended door unlock time then becomes the configured door held open active time, as indicated at block 144, which is passed for use by the decision block 126.

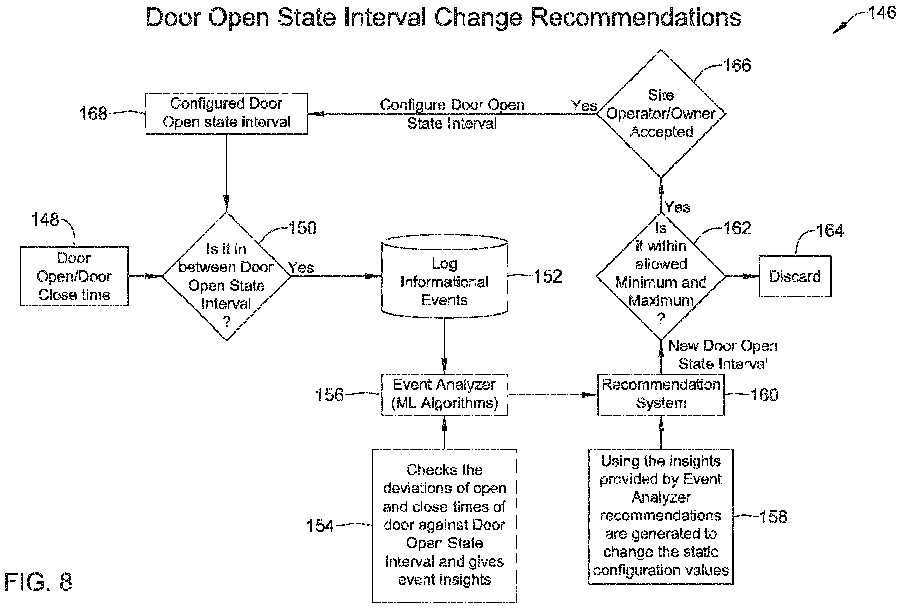

Figure 8 is a flow diagram showing an illustrative method 146 of recommending a change to the door open state interval. A door open/door close time is obtained, as indicated at block 148. At decision block 150, a determination is made as to whether this value is within a door open state interval. If so, control passes to block 152, and the information event is logged. If not, an information event is also logged, sometimes along with the actual time that the door remained open. The deviations of door open/door close times over time are checked, as indicated at block 154, and corresponding event insights are provided to an event analyzer, as indicated at block 156. The event analyzer also has access to the logged informational events at block 152. The event analyzer uses the insights and/or the logged information events to determine recommendations for making changes to static configuration settings, such as the door open state interval, as indicated at block 158. The recommendations are provided to the recommendation system, as indicated at block 160. A new door open state interval duration is recommended. At decision block 162, a determination is made as to whether the newly recommended door open state interval is within an allowed range. If not, the newly recommended door open state interval is discarded, as indicated at block 164. If the newly recommended door open state interval is within the allowed range, control passes to block 166, where the site operator or owner is asked to accept the newly recommended door open state interval. The newly recommended door open state interval then becomes the configured door open state interval, as indicated at block 168, and passed for use by the decision block 150.

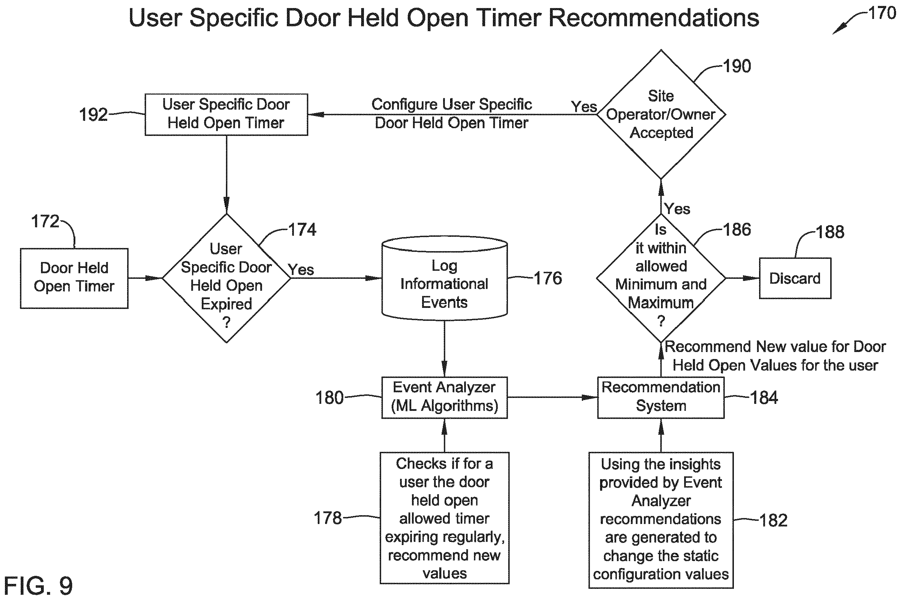

Figure 9 is a flow diagram showing an illustrative method 170 for changing a user-specific door held open timer recommendation. In this example, the user-specific door held open timer represents a maximum duration that a door may remain open before an alert is issued. In some cases, each specific user may be assigned a set of static (or dynamic) security system settings. For example, if a particular user is in a wheel chair, the system may assign a longer door held open duration than a non-wheel chair bound user to provide the wheel-chair bound user extra time to get through the door without issuing an alarm. In the example of Figure 9, a door held open timer is initiated, as indicated at block 172. The door held open timer may be initiated in response to a card swipe, which may identify the particular user and thus the user-specific door held open timer value to be used for that particular user. At decision block 174, a determination is made as to whether the user-specific door help open timer had expired. It is also determined whether the door was closed (or not) when the user-specific door held open timer expires, and in some cases, the time that the door was actually closed relative to user-specific door held open timer. This information is recorded as an information event, as indicated at block 176.

A check is made as to whether the timer for the particular user expired before the door was closed on a regular basis, as indicated at block 178, and corresponding event insights are provided to an event analyzer, as indicated at block 180. The event analyzer also has access to the logged informational events at block 176. The event analyzer uses the insights and/or the logged information events to determine recommendations for making changes to static configuration settings, such as the user-specific door held open timer, as indicated at block 182. The recommendations are provided to the recommendation system, as indicated at block 184. A new door held open duration for a particular user is recommended. At decision block 186, a determination is made as to whether the newly recommended door held open duration is within an allowed range. If not, the newly recommended door held open duration is discarded, as indicated at block 188. If the newly recommended door held open duration is within the allowed range, control passes to block 190, where the site operator or owner is asked to accept the newly recommended user-specific door held open duration. The newly recommended user-specific door held open duration then becomes the configured user-specific door held open duration, as indicated at block 192, which is passed for use by the decision block 174.

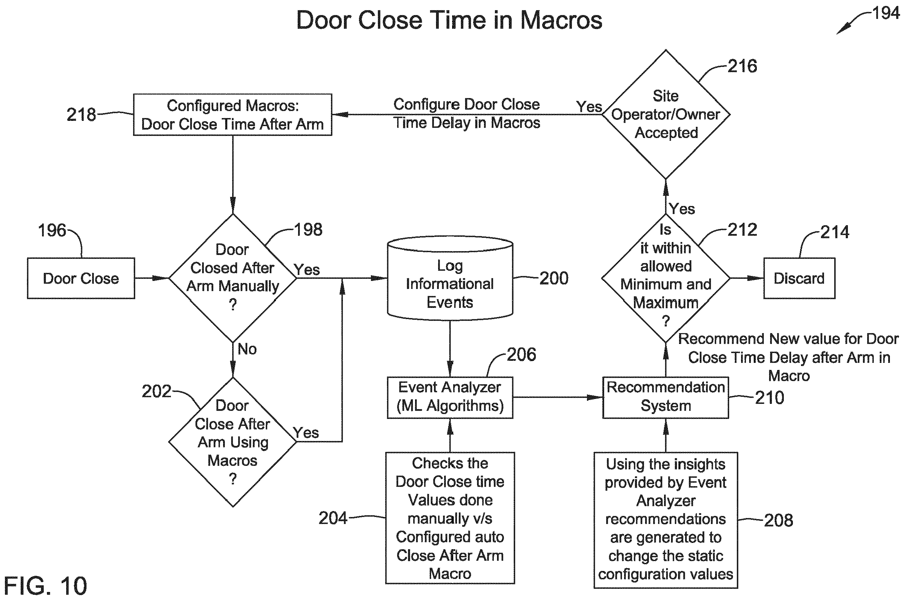

Figure 10 is a flow diagram showing an illustrative method 194 for recommending a change to a door close time. In this example, the door close time represents a duration in which an exit door must be closed before the security system actually becomes armed after a user manually arms the security system. In Figure 10, a door closes, as indicated at block 196. At decision block 198, a determination is made as to whether the door closed after the security system was manually armed. If so, an information event is logged, as indicated at block 200, sometimes including an elapse time between when the door was closed relative to when the security system was manually armed. If not, control passes to a decision block 202, where a determination is made as to whether the door closed after the security system was armed using macros. If so, the information event is logged, as indicated at block 200, sometimes including an elapse time between when the door was closed relative to when the security system was armed using macros. A check is made regarding door close events after manually arming versus door close events after macro-arming, as indicated at block 204, and corresponding event insights are provided to an event analyzer, as indicated at block 206. The event analyzer also has access to the logged informational events at block 200. The event analyzer uses the insights and/or logged information events to determine recommendations for making changes to static configuration settings, such as the door close time, as indicated at block 208. The recommendations are provided to the recommendation system, as indicated at block 210. A new value for door close time is recommended. At decision block 212, a determination is made as to whether the newly recommended door close time is within an allowed range. If not, the newly recommended door close time is discarded, as indicated at block 214. If the newly recommended door close time is within the allowed range, control passes to block 216, where the site operator or owner is asked to accept the newly recommended door close time. The newly recommended door close time then becomes the configured door close time, as indicated at block 218.

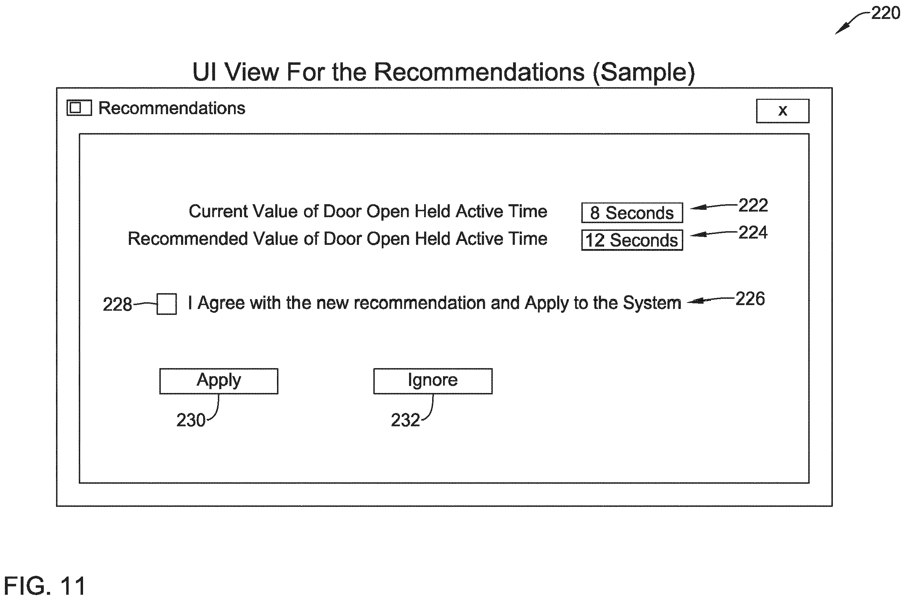

Figure 11 is a screen shot showing a screen 220 that may be displayed by the security system 10 when soliciting user approval of a recommended change. In this particular example, the recommended change is to the door open held active time, but it will be appreciated that similar screens may be created and displayed soliciting approval of any of a variety of different security system parameter changes. The screen 220 includes a section 222 that provides information regarding the current setting, and a section 224 that provides information regarding the newly recommended setting value. A section 226 includes a check box 228 that the user can select in order to approve the newly recommended setting. The screen 220 includes an apply button 230 that may be selected in order to instruct the security system 10 to implement the newly recommended parameter value. An Ignore button 232 may be selected to discard the newly recommended parameter value.

Those skilled in the art will recognize that the present disclosure may be manifested in a variety of forms other than the specific embodiments described and contemplated herein. Accordingly, departure in form and detail may be made without departing from the scope and spirit of the present disclosure as described in the appended claims.

## Claims

1. A method of improving operation of a security system for a facility, the security system including a plurality of security system components, at least some of the plurality of security system components providing security data pertaining to the particular security system component, the method comprising:
collecting over time the security data from each of the at least some of the plurality of security system components;
identifying a pattern based at least in part on the collected security data, the pattern identifying an expected behavior of one or more occupants of the facility;
receiving live security data from at least some of the plurality of security system components, the live security data representing a current behavior of one or more occupants of the facility;
comparing at least some of the live security data with the identified pattern to identify when the current behavior of one or more occupants of the facility deviates from the expected behavior by more than a threshold;
when the current behavior of one or more occupants of the facility deviates from the expected behavior by more than the threshold, changing one or more security system settings of the security system; and
operating the security system using the one or more changed security system settings.

2. The method of claim 1, wherein changing one or more security system settings comprises automatically changing the one or more changed security system settings.

3. The method of claim 1, wherein changing one or more security system settings comprises receiving user input authorizing the change of the one or more changed security system settings in response to an automatically generated recommendation.

4. The method of claim 1, wherein the live security data represents a length of time that one or more occupants took to carry out a predefined security system-related task, and the identified pattern identifies an expected length of time to carry out the predefined security system-related task.

5. The method of claim 4, wherein the predefined security system-related task comprises one or more of:
opening a door after unlocking the door;
closing a door after entry;
arming the security system; and
disarming the security system.

6. The method of claim 1, wherein the live security data includes a time stamp for a detected event, and the pattern yields an expected time of day for the detected event.

7. The method of claim 6, wherein the detected event comprises accessing an area of the facility.

8. The method of claim 1, wherein changing the one or more changed security system settings comprises changing a static configuration setting of the security system.

9. The method of claim 1, wherein changing the one or more changed security system settings comprises changing a security setting that increases a security level of at least part of the facility.

10. The method of claim 1, wherein changing the one or more changed security system settings comprises changing a first security setting that increases a security level of a first part of a facility and changing a second security setting that decreases a security level of a second part of the facility.

11. A security system comprising:
a plurality of security system components, at least some of the plurality of security system components providing security data pertaining to the particular security system component;
a controller operatively coupled to the plurality of security system components, the controller configured to:
receive at least some of the security data;
identify one or more violations of one or more security requirements based at least in part on the received security data, wherein each of the one or more security requirements is defined at least part by one or more static configuration settings of the security system;
determine a change to one or more of the static configuration settings of the security system based at least in part on the identified one or more violations;
make the determined change to one or more of the static configuration settings; and
operate the security system using the changed one or more of the static configuration settings.

12. The security system of claim 11, wherein the controller is configured to receive a user input authorizing the making of the determined change to one or more of the static configuration settings.

13. The security system of claim 11, wherein the controller is configured to automatically make the determined change to one or more of the static configuration settings.

14. The security system of claim 11, wherein the changed one or more of the static configuration settings comprises one or more of:
a transient duration for making a card reader swipe;
a door lock duration;
a door held open warning time;
a door held open active time;
a door open state time; and
a door latch output delay.

15. The security system of claim 11, wherein the controller is configured to:
identify one or more events associated with one or more security requirements based at least in part on the received security data; and
determine a change to one or more of the static configuration settings of the security system based at least in part on the identified one or more events.
